# EUROPEAN PATENT SPECIFICATION

(11) **EP 2 140 316 B1**
(45) Date of publication and mention of the grant of the patent: **28.12.2011**
(21) Application number: 08780495.1
(22) Date of filing: 28.03.2008
(51) Int. Cl.: G05B 19/042

(54) **ROBOT OPERATOR CONTROL UNIT CONFIGURATION SYSTEM AND METHOD**
KONFIGURATIONSSYSTEM UND -VERFAHREN FÜR EINE ROBOTEROPERATOR-STEUEREINHEIT
SYSTÈME DE CONFIGURATION D'UNITÉ DE COMMANDE D'OPÉRATEUR DE ROBOT ET PROCÉDÉ

(30) Priority: 29.03.2007 US 908932 P
(43) Date of publication of application: 06.01.2010
(73) Proprietor: iRobot Corporation, Bedford, MA 01730 (US)
(72) Inventor: JAMIESON, Josef, Billerica, MA 01821 (US); SHEIN, Andrew, Winchester, MA 01890 (US)
(74) Representative: Schley, Jan Malte
(86) International application number: PCT/US2008/058645
(87) International publication number: WO 2008/127863

(56) References cited:
- WO-A-99/61961
- US-A1- 2002 173 877
- US-A1- 2005 096 760
- US-A1- 2005 234 592
- US-A1- 2006 052 884
- US-A1- 2007 016 309
- US-B1- 6 473 656

## Description

### TECHNICAL FIELD

This invention relates to robotic operator control units and their design and communications protocols, and specifically to an architecture and methods for automatically configuring operator control units based on configuration schema and protocol definitions provided from a robot or payload.

### BACKGROUND

Many robots such as, for example, tactical robots used for battlefield surveillance or bomb detection and handling, employ an operator control unit (OCU) allowing remote control of the robot and viewing of sensor and telemetry and other data from the robot. A preferred robot OCU typically has a graphical user interface (GUI) including, for example, instrument panels with instrument models displaying data from the robot, and a video display showing a video feed from one or more robot cameras. The GUI may also include menu and multiple screens, windows, or panels. Buttons soft buttons, joysticks, touchscreens, and other user input devices present on the OCU receive operator control input, which is professed, formatted, and transmitted to the robot according to one or more communications protocols between the robot and the OCU.

Typically, a robot OCU is designed specifically for the robot type it is intended to control. Such a scenario results in an design OCU for every design or product line of robots, each OCU with a unique user interface, hard coded communication protocols, and specialized functionality for common tasks. Often little or no code may be shared among different OCU and protocol designs, and other elements such as, for example, but in mapping virtual instrument mapping. Further, with the robot end-user, this may create a dificult learning curve to drive the robot and limited ability to augment the user interface.

WO 99/61961 A1 discloses in a plant for controlling an equipment adapted to carry out a process a superior arrangement that has a first interface to a programming unit and a second interface between the process equipment and the arrangement. The arrangement has members for transmitting information between the two interfaces. A memory member adapted to store important data required for describing and defining the process of the process equipment is arranged in the process equipment itself. The arrangement is provided with a rule data base and a text data base containing a configuration file for communication between the process equipment and the arrangement through the second interface by utilizing a general process application protocol and a text file, respectively, adapted to the format of said data in the memory member of the process equipment.

What is needed, therefore, is a unified framework for building common functionality into diverse operator control units. What is further needed is a system to support rapid control-unit prototyping and cross platform development for robotic controllers

### SUMMARY

The invention relates to a method of configuring a robot operator control unit and a robot operator control unit according to claims 1 and 14. Preferred embodiments are described in claims 2-13, 15 and 16.

A unified framework is provided for building common functionality into diverse operator control units. A set of tools is provided for creating controller configurations for varied robot types. Preferred controllers do one or more the following: allow uplouding of configuration files from a target robot, adhere to common user interface styles and standards, share common functionality, allow extendibility for unique functionality, provide flexibility for rapid prototype design, and allow dynamic communication protocol switching.

In further variation, the methods herein employ a configuration file including one or more protocol definitions. The protocol definitions may be formatted in a tagged markup language such as XML.

The method of configuring a robot operator control unit includes storing, on a robot, a definition of a robot data communications protocol; communicating a request from a robot operator control unit to the robot for the definition of the robot data communications protocol; communicating, from the robot to the robot operator control unit, the definition of the robot data communications protocol; and configuring the robot operator control unit to receive telemetry data from the robot formatted according to the definition of the robot data communications protocol.

Variations may include one or more of the following: storing, on the robot, a definition of a robot control protocol; communicating a request from the robot operator control unit to the robot for the definition, of the robot control protocol; communicating, from the robot to robot operator control unit, the definition of the robot control protocol; and configuring the robot operator control unit to send robot command and control data to the robot formatted according to the definition of the robot control protocol. In other variations, the communication of any protocol definitions from the robot to the operator control unit is accomplished by transmitting one or more configuration files from the robot to the operator control unit. The protocol definitions stored on the robot may be formatted with a tagged markup language, such as XML,

In still further variations, the method includes storing, on the robot, a definition of a robot function menu structure; communicating a request from the robot operator control unit to the robot tor the definition of the robot function menu structure; communicating; from the robot to robot operator control unit, the definition of the robot function menu structure; and configuring the robot operator control unit to present a robot operating menu to a user formatted according to the definition of the robot function menu, structure.

Another implementation provides a method of configuring a robot operator control unit including: storing, on a robot, a definition of a robot controller input mapping; communicating, in response to a request from a robot operator control unit, the definition of the robot controller input mapping from the robot to the robot operator control unit; and configuring the robot operator control unit to map input signals from at least one user input device, associated the robot operator control unit, according to the definition of the robot controller input mapping. The robot controller input mapping may be formatted with a tagged markup language such as XML.

Another implementation provides a method of configuring a robot operator control unit comprising: storing, on a robot, a definition of a robot instrument scene graphic; communicating, in response to a request from a robot operator control unit, the definition of the robot instrument scene graphic the robot to the robot operator control unit; and configuring the robot operator control unit to display at least one robot control panel according to the definition of the robot instrument scene graphic.

Variations may include one or more of the following: the definition of the robot instrument scene graphic may be formatted as a scene graph such as an OSG scene graph. The scene graph may include a record of one or more sub scene graphs, which may correspond to respective robot control panels displayed on the robot operator control unit. The definition of the robot controller input mapping may formatted with a tagged markup language such as XML.

In another variation, the method may further include: storing, on the robot, a definition of a robot control protocol; communicating a request from the robot operator control unit to the robot for the definition of the robot control protocol; communicating, from the robot to robot operator control unit, the definition of the robot control protocol; and configuring the robot operator control unit to send robot command and control data to the robot formatted according to the definition of the robot control protocol.

In yet another variation, the method may further include: storing, on the robot, a definition of a robot controller input mapping; communicating, in response to a request from a robot operator control unit, the definition of the robot controller input mapping from the robot to the robot operator control unit; and configuring the robot operator control unit to map input signals from at, least one user input device, associated the robot operator control unit, according to the definition of the robot controller input mappings.

In yet another variation, the method may further include: storing, on the robot, a definition of a robot controller input mapping; communicating, in response to a request from a robot operator control unit, the definition of the robot controller input mapping from the robot to the robot operator control unit; and configuring the robot operator control unit to map input signals from at least one user input device, associated the robot operator control unit, according to the definition of the robot controller input mapping.

And, in still another variation, the method may include: storing, on the robot, a definition of a robot function menu structure; communicating, in response to a request from a robot operator control unit, the definition of the robot function menu structure; and configuring the robot operator control unit to present a robot operating menu to a user formatted according to the definition of the robot function menu structure. The communication of the robot function menu structure from the robot to the operator control unit may be accomplished by transmitting one or more configuration files from the robot to the operator control unit.

In these several variations, the communication of all of the definitions from the robot to the operator control unit may be accomplished by transmitting a configuration filc.

A robot control system is provided including: a robot comprising a controller, a data memory operably coupled to the controller and holding a robot configuration file; an operator control unit comprising a scene graph display module, a protocol adapter module, a controller I/O module, and a connection marshaller module operative to request configuration data from the robot and configure the scene graph display module, the protocol adapter module, and the controller I/O module according to the configuration data.

In another embodiment, a robots operator control unit is provided including: a scene graph display module; a protocol adapter module; a controller I/O module; and a connection marshaller module operative to request configuration data from a robot and configure the scene graph display module, the protocol adapter module, and the controller I/O module according to the configuration file. The robot operator control unit may further include a publication/subscription database in which robot telemetry data is associated with nodes in a scene graph displayed by the scene graph display module.

The details of one or more embodiments of the invention are set forth in the accompanying drawings and the description below. Other features, objects, and advantages of the invention is apparent from the description and drawings, and from the claims.

### DESCRIPTION OF DRAWINGS

Fig. 1 is an architectural diagram representation of a robot operator control unit (OCU) design and configuration system
Fig. 2 is a blocs diagram of a robotic operator control unit (OCU).
Fig. 3 shows a flow chart of the control event path for control inputs to an OCUU according to one implementation.
Fig. 4 shows a flow chart 400 of the data flow path for telemetry data sent from a robot to an OCU.
Fig. 5 shows a flow chart of a new robot activation or configuration sequence.
Fig. 6 shows a flow chart of a robot payload configuration sequence.
Like reference symbols in the various drawings indicate like element.

### DETAILED DESCRIPTION

Fig, 1 is an architectural diagram representation of a robot operator control unit (OCU) design and configuration system 100. The depicted system may be used to design and configure OCU's for various robots or robot payloads. In preferred implementations, the system provides a robot the ability to store its own configuration which is then uploaded to an OCU to configure the OCU to control that robot. System 100 may also be referred to as a robot controller common architecture, including various design and configuration tools. In general the system includes an OCU builder tool 102, which is employed to design and configure robotic OCU's 104 for controlling a robot 106.

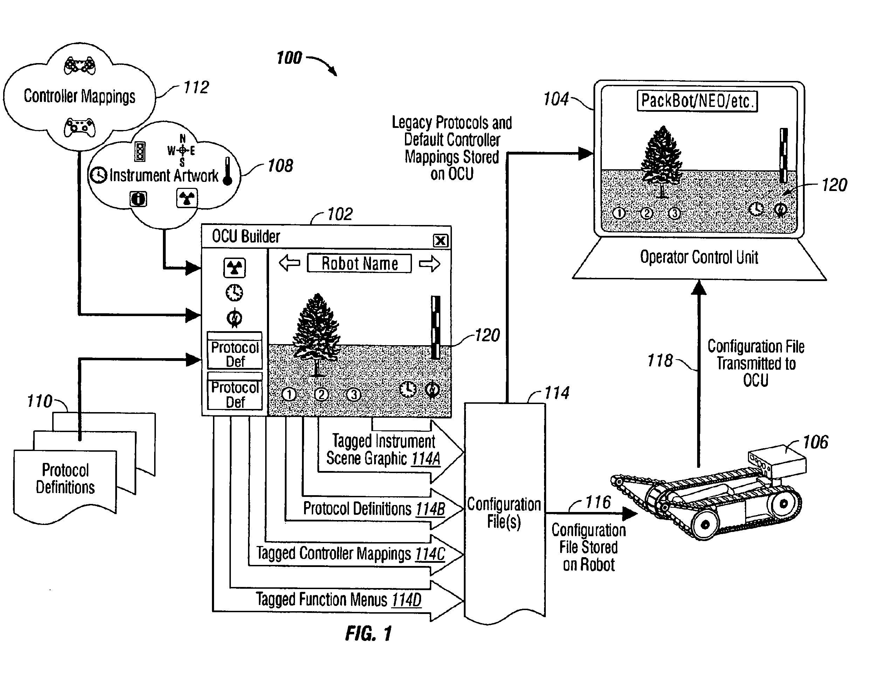

With regard to the high level system diagram depicted in Fig. 1, the depicted OCU Builder 102 is preferably a stand-alone software application. Its purpose is to create the configuration files that is uploaded to the OCU device. Inputs to the OCU Builder are resource sets 108 making up the OCU Graphical User Interlace (GUI); communication protocol definitions 110, and various controller mappings 112. The outputs from the OCU Builder are configuration files 114 that organize the graphical resources into a scene graph for rendering controller device button/joystick mappings and protocol topic names or definitions, which bind the graphics and controller commands to network communication data. The configuration files 114 are loaded onto individual robots (flow step 116) for later upload to OCU devices 104 (flow step 118). Configuration files 114 are employed to configure an OCU Framework system running on OCU 104. The OCU Framework system is software that runs on the OCU device 104 hardware. The Framework system handles robot communication, control, and display of robot telemetry data.

In further detail OCU Builder 102 is preferably a stand-alone application allowing the user to visually plan the layout of the graphical instruments (i.e., 120) used on the OCU device 104. In this implementation, OCU Builder 102 allows importing three types of data; instrument models 108 in graphical formats (preferably one supported by the preferred scene graph API, OpenSceneGraph (OSG)), controller mapping definitions 11 and communication protocol definitions 110. In a preferred implementation, the controller mappings 112 and communication protocol definitions 110 will be in an XML fomat. A protocol definition 110 preferably includes a list of communication data, data types and Aware Pub/Sub (publication/subscription) database topic names used for each piece of data.

From the set of instrument models 108, the user will choose which instruments will be displayed in each panel on the screen of the OCU device 104. The user will also arrange the instrument layout in each panel. The user will then be able to select a robot communication protocol definition 110 and bind the robot telemetry data topics to the various instruments 120 in each panel. Likewise, the user is able to identify which controller input devices present on OCU 104 (keyboards, joysticks, gamepads, touchscreens, etc.) will be used, and bind the controller input mapping to the robot control data topics.

Referring still to fig. 1, the output from the OCU Builder 02 is a set of data files 114. which eventually will be uploaded to the OCU device 04. In this implementation, included in data files 114 is at least one OSG scene graph 114A, which is the entire graphical display tor a particular robot. Other data flies will include controller mapping 114C and communication protocol definitions 114B. Further, a data file of tagged Function menus 114D is included. Preferably, items 114A-D are generated as data files and subsequently combined into a single configuration file 114. However, this is not limiting and the precise format of data generated by OCU builder 102, combined into configuration file 114, or loaded into robot 106 may vary. For example multiple configuration files may be limited onto robot 106, or a separate data file for protocol definitions were tagged function menus may never be generated, for example, as such items may be entries in a larger data file. In the depicted implementation, for data files are combined into one configuration files. Further, in other implementations, other robot configuration stems may be included in a configuration file 114. In a preferred implementation, all data items in each file will be tagged with Pub/Sub topic names binding the controls and actions with the robot 106's networked data. XML the preferred tugging format, but others may be employed.

In use, in one scenario, default controller mappings for devices supported by a particular manufacturer will be loaded onto OCU devices prior to robot communication. Likewise, legacy robot protocols may be installed directly on OCU devices to support legacy protocols in use before the adoption of common architecture 100. To support control of legacy robots, default instrument-graphics data files will also require prior loading onto OCU devices.

Preferably, for generations of robots employing the common architecture 100, the protocol definitions 110 and instrument-graphies data files 108 will be loaded on the individual robots 106. Controller mapping definitions may or may not be loaded on the individual robots 106. Upon first contact with an OCU device 104, the robot 106will upload its configuration data files 114 to the OCU 104. Future contact between such a matched OCU/robot pair may only require a quick checksum of configuration files on both robot 106 and OCU 104 to determine if an upload is necessary.

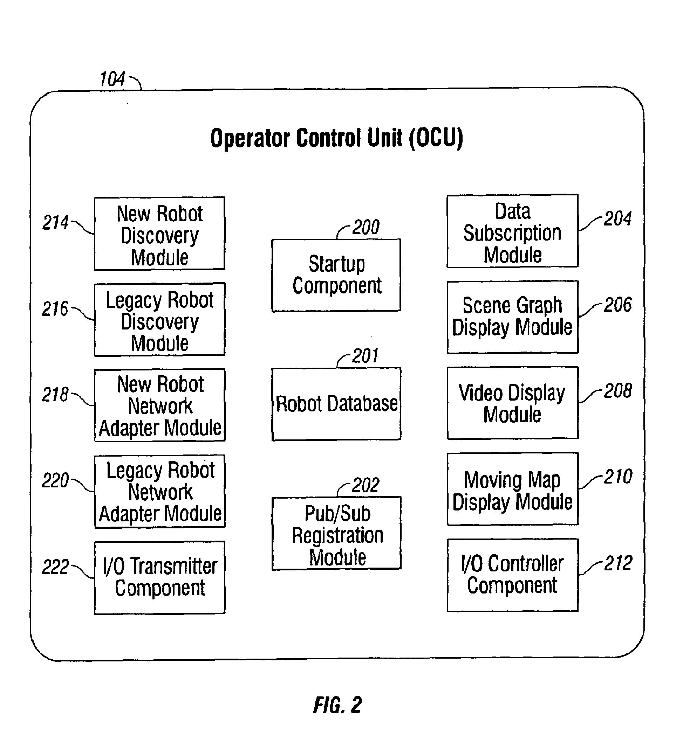

Fig. 2 is a block diagram of a robotic operator control unit (OCU). In the depicted implementation, OCU 104 includes several software modules referred to as the OCU Framework system. The OCU framework system is preferably software that runs on an operating system such as, for example, linux, which itself runs on the OCU device hardware. The framework handles robot communication, control, and display of robot telemetry data and the robot user interface.

The depicted startup component 200 runs at startup of the OCU to bring the system up to an operating state. Startup component 200 instantiates objects and creates connections between object. Use of inter-object connections and interfaces will be further described below. In a preferred embodiment, startup component 200 is built with configuration scripts in the Python programming language. Of course, other suitable programming languages may be used. The remaining components are preferably programmed in C++, Python, or a suitable database query language.

After startup, startup component 200 and control to the OCU Framework, which is largely event driven. In this implementation, the OCU GUI initialization is data driven by the configuration files uploaded from the individual robots upon first contact. The OCU GUI software includes components 204,206,208, and 210 in Fig. 2, which combined may be considered as a graphics component. In this implementation, the OCU CUI is built around an OSG scene graph displayed by scene graph module 206. In preferred implementations, the scene graph is configured such that the top most branches of the scene graph enumerate the views to each individual robot within communication range. Lower branches of the scene graph enumerate the various graphical panels of each robot's GUI. Final brunches of the scene graph will contain each instrument-model within each panel of the GUI. The OCU Framework will leave window management (multiple panels per window, multiple windows, full screen, etc.) to die operating system on which it runs.

At the heart of the OCU Framework is an Publication/Subscription database 202 that drives between the robot network packets and the OCU graphical user interface (GUI). In use, when a new robot 106 is contacted by OCU 104, its GUI (a scene graph branch uploaded in a configuration file) will be added to the OCU for rendering. Instrument nodes within the scene graph will have been tagged with a subscription topic name defined by the OCU Builder 102. The data subscription module 204 associates the scene graph instrument nodes with their data streams by registering them with Pub/Sub registration module 202. During rendering frame updates, each instrument will retrieve its specific telemetry data via the subscribed topic in the Pub/Sub database. When communication packets arrive from each robot, the data within the packet will extracted and published to the same Pub/Sub database under topic names defined by the OCU Builder.

For that support legacy robots, in order for legacy robots to not require software upgrades, default protocol definitions, controller-map definitions, and OUI scene graphs will preferably be stored directly on the OCU prior to contact with robots. During the rotot/OCU connection handshaking, the OCU will determine which stored default GUI to load from memory and use with that particular robot.

Also included in OCU 104 is new robot discovery module 214, which manages the discovery and installation of configurations for robots employing configuration flies 114 (Fig. 1). Legacy robots that do not have a conformant configuration file 114 are discovered by legacy robot discovery module 216. Referring to the new robot discovery module, this module 214 preferably operates with a common discovery packet to ail new robots. A connection marshaller manages the robot database 201, which contains identities of known robots, records of their control adapter, IP address, protocol, and their last contact time. Module 214 further employs a Protocol Description Packet to in to inform the OCU of the robot's communication protocol.

Legacy robot discovery module 216 includes several protocol modules that are employed selectively to discover and interact with legacy robots. In one implementation, module 216 includes a TMR (tactical mobile robot) protocol module, a EOD/PCC Protocol Module, a JAUS (Joint Architecture for Unmanned Systems) Protocol Module, and other suitable legacy protocol modules that may be needed for communication with whatever legacy robots OCU 104 is intended to control.

Referring still to Fig. 2, OCU 104 includes a new robot network adapter module 218 and a legacy robot network adapter module 220, Again, the reference to "new robot" refers to robots compliant with the configurable OCU controller system described herein, while legacy robots may have proprietary OCU's that do not provide configuration files according to any of the implementations described herein. The new robot network adapter module 218 preferably manages runtime protocol descriptions by receiving uploaded protocol descriptions from robots. Module 218 also manages dynamic network connections, provided as needed for communication with conformant robots. Further, module 218 also provides Pub/Sub database mapping from received protocol communications or packets containing data or communications for posting to the Pub/Sub database. Legacy robot network adapter module 220, by contrast, may employ pre-defined protocol descriptions where dynamic connections are not supported or provided by the target robot. Legacy module 220 preferably also supports dedicated network connections to its target robots, and Pub/Sub database communication.

I/O component 222, in this implementation, includes a robot command module which performs I/O control to command conversion. The robot command module also contains command marshaller for grouping, ordering, and prioritizing commands to be sent. I/O transmitter component 222 also includes drivers for the transceiver that internets with the robot controlled. In preferred implementations, the transceiver is a radio transceiver, but wireline communication channels such as, for example, a spooled fiher-optic cable, are also used.

Referring still to Fig. 2, OCU 104 includes a video display module 208 to feed one or more video displays received from robot cameras to the operator display screen. Similarly, a moving map display module 210 displays a map with relative locations of the operator and robot(s) that OCU 104 controls. The moving map may also display other robots in the vicinity from which the present OCU may receive information. A moving map may be implemented with GPS or triangulation data, or a combination of geolocation methods, and may include a terrain or area street map.

OCU 104 further includes I/O controller component 212, which manages the status of various input/output components installed on OCU 104. Preferably, component 212 includes a keyboard/mouse driver, joystick driver, game controller (Yoke) driver, and pack driver. Other suitable I/O devices may also be interfaced. Control input flow will be further described below.

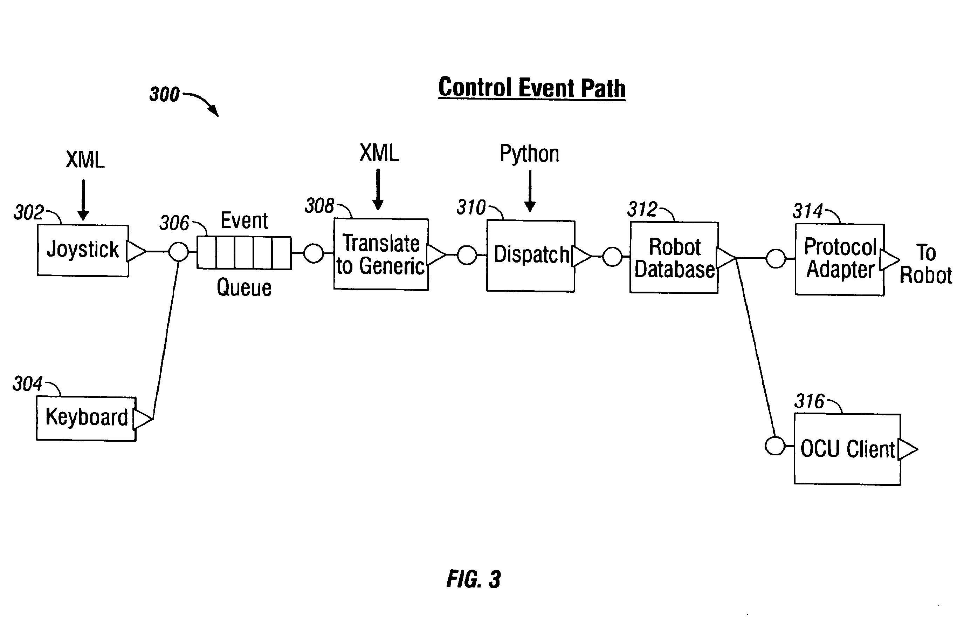

Fig. 3 shows a flow chart of the control event path for control inputs to an OCU according to one implementation. In the depicted event path flow chart 300, a control event is generated by user interactivity with a user interface device such as joystick 302 or keyboard 304. The I/O controller component generates an XML message describing the input signal received from the user interface device as a control event. While XML is used in this implementation, other tagged markup languages, or a predefined untagged format may be employed. This XML event is passed to an event queue 306, which holds pending but unprocessed controller events. Preferably, event queue 306 is a FIFO queue, but other implementations may be used.

In the depicted implementation, but they joystick and keyboard input, the I/O controller component maps the joystick from signal values to key names. A "dead zone" conversion may be specified depending on the type of joystick and application. For example, a left joystick movement made on an attached Xbox controller joystick may be converted to a key name as shown in the XML piece in Table 1.

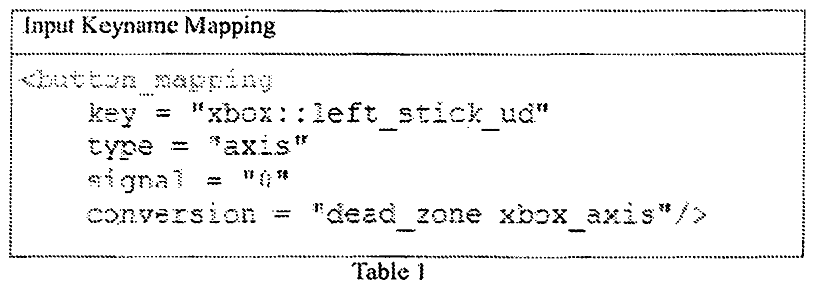

The I/O controller component also maps keyboard keys and joystick buttons to generic control functions, depending on the OCU mode or robot mode. Such mapping preferably accomplished in another XML file from the input keyname mapping shown in Table 1, however this is not limiting and the XML to map controller input to protocol output may be accomplished in various ways. Further while XML is preferred, of course other suitable conversion schemes may be used. As an example of keyname conversion to generic functions, the Table 1 keyname result is converted to generic fucnations by the XML code shown in Table 2.

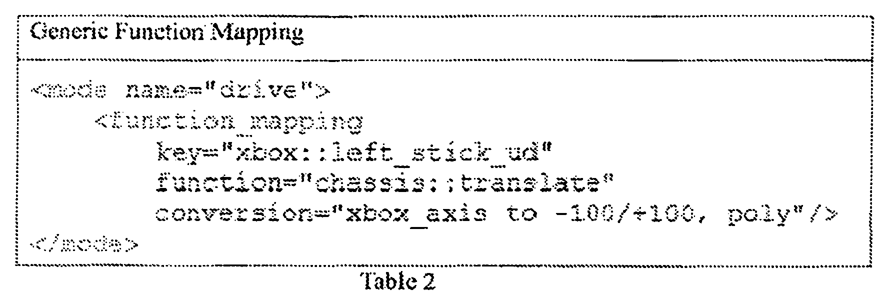

The generic function mapping shown in Table 2 happens, in this implementation, in step 308 in Fig. 3. After the translation to generic, the depicted control event path 300 proceeds to dispatch step 310. This step looks up the robot's protocol adapter in the robot database 312. From there, the generic function mapping is passed to the robot protocol adapter 314, which maps, the generic functions to a network packet. For example, XML can mapping the generic function shown in Table 2 into a network packet is shown in Table 3.

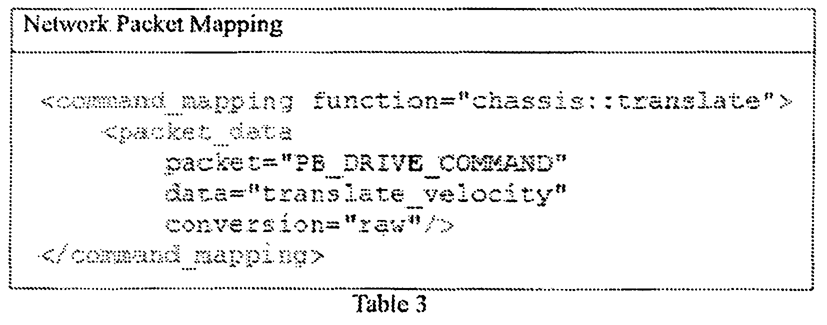

The protocol employed to transmit the resuming network packet may be customized in another file from that containing the code shown in Table 3.

The network packet is communicated to the robot from protocol adapter 314. From this point, the robot implements or handles the command. A single robot may have multiple activated protocol adapters for communication with different modules or payloads, for example.

Also depicted in Fig. 3 is a connection to an interface on OCU client 316. This interface provides a way to feed back consequences of control events to the I/O controller component. Such a scheme may be employed, for example, to adjust control input mapping or sensitivity where operator input activates such adjustment. For example, an operator pushes a button to change the control focus to a manipulator and rather than robot maneuvering. In this case, a network packet would be passed to the OCU client causing an adjustment to the stick sensitivity and operating mode, as well as scene graph changes. Further control events are then processed under the new operating mode.

Fig. 3 depicts triangles and circles between the various modules. These represent and "interfaces" employed to communicate between modules. This scheme, also developed by assignee of the present application, is referred to as Aware 2.0. The scheme provides inter-module communication which may be understood as function pointers that work between components. Each depicted triangle represents a connection that is keyed to a particular interface, represented by a circle. Typically there is a one-to-one relationship between connections and interfaces, but a single interface may support multiple connections such as the depicted interface on the left side of event queue 306.

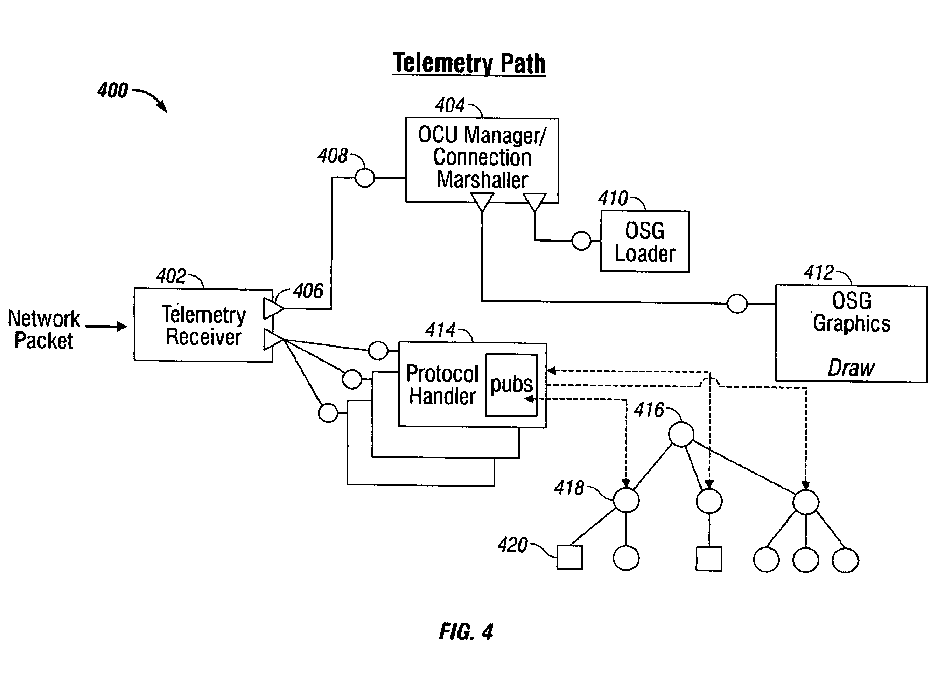

Fig. 4 shows a flow chart 400 of the data flow path for telemetry data sent from a robot to an OCU. In this implementation, network packet is received by the OCU transceiver 402 and passed to the new robot network adapter module 218 (Fig. 2). If the network adapter module does not recognise the source robot, it will pass the packet to be OCU manager/connection marshaller 404 to establish an association with the robot so that the robot may be recognized. In this implementation, the depicted components communicate via the connection/interface scheme described above, In the depicted flow chart the network adapter module 218 employs connection 406 which is linked to interface 408 exposed by connection marshaller 404. If the connection marshaller determines a new robot is present it then initiates the activation sequence for a new robot. Such an activation sequence is further described below. The OCU manager/connection marshaller creates a need protocol handler 414 for the robot, loads a new OSG scene graph for the robot with OSG loader 410, and activates the scene graph with the OSG graphics component 412, which then draws the scene graph in the appropriate place on the OCU display. After this, the scene is drawn as part of the cyclical graphics update routine running on OCU 104.

Future telemetry packets received from the robot at telemetry receiver 402 will be recognized, and sent via a correction to that robots protocol handler (or "protocol adapter") 414. In this implementation, each protocol adapter has a packet dictionary describing the packet contents. When a packet comes in to a protocol adapter it looks up the structure of the packet in the protocol packet disctionary and demarshals or disassembles the packet into place in the robot Pub/Sub database by publishing the telemetry data received from the robot to the appropriate Pub/Sub notices in the OCU Pub/Sub database.

In one implementation, protocols are defined with a tagged markup language such as, for example, XML. A protocol is preferably defined as a protocol class containing protocol definitions for multiple packet types. An example XML code snippet defining a protocol class is shown in Table 4.

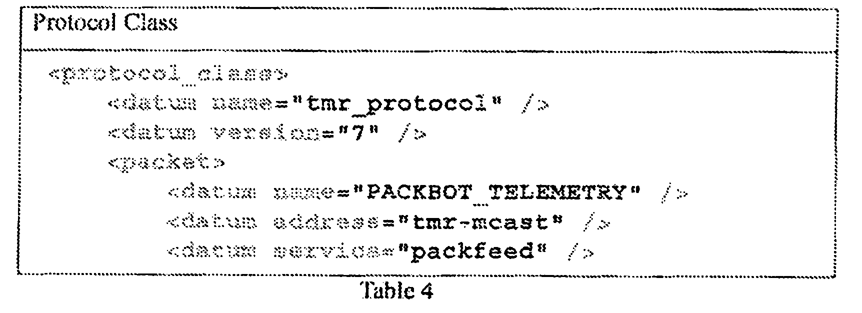

Typically, a packet protocol is defined by the datatype and data position within the packet. Table 5 shows an example protocol packet definition or Packbot robot telemetry data packet.

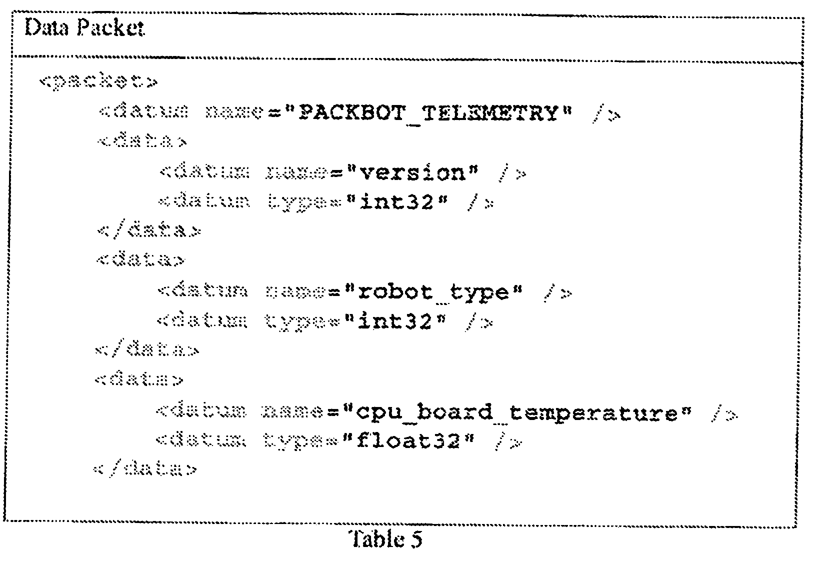

In this implementation, metadata associated with packet variable data may define screen position and the type of instrument viewed on the OCU. Table 6 shows an example metadata set associated with certain data in the Packbot telemetry data packet.

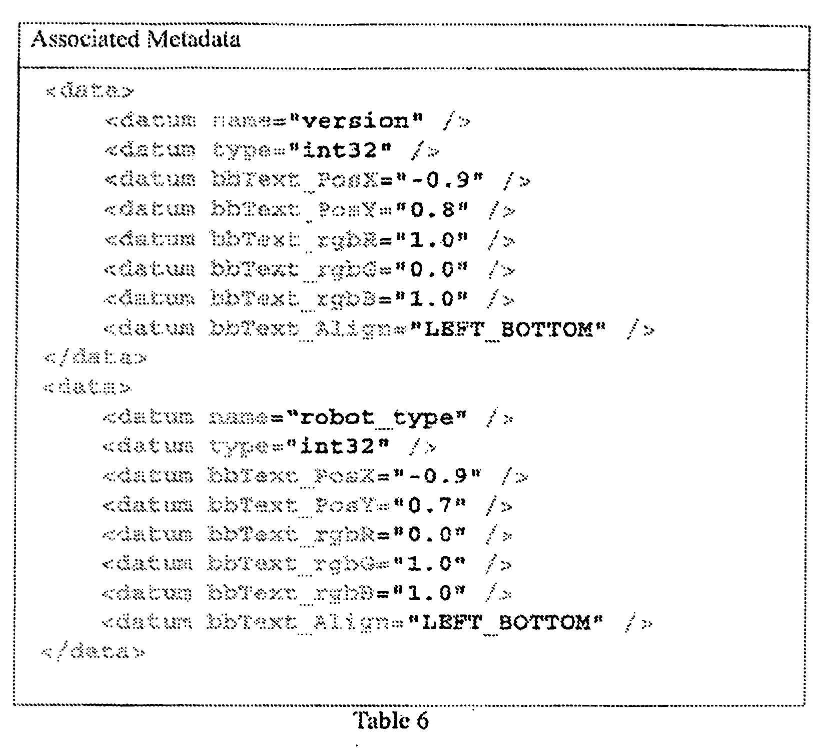

Fig. 4, also depicted as ain abstract representation of a scene graph 416. The depicted dotted lines shows associations between each piece of received telemetry data and its associated display in scene graph 416. The depicted scene graph node 418 is a degree of freedom bead ("DOF head") that is subscribed or aware of the associated telemetry data notice in the Pub/Sub database. For example, DOF bead 418 may be associated with a robot speed indicator. Such at display may appear in the appropriate display location designated by scene graph 416. Typically a DOF bead will have an associated graphic 420 that may be for example, a speedometer dial face. Other items may be associated, such as a dial needle. When the scene graph is displayed it is traversed, and the DOF beads are updated with their subscribed values. The associated graphics are then typically rotated, scaled, or otherwise translated with graphics routines such as matrix operations. For example, a DOF bead 418 may indicate how far to rotate a needle on a depicted dial graphic. The combined result is displayed in this scene graph's scene, resulting in a display panel showing the robot's telemetry data to the operator. In one embodiment, the scene graph display module updates all its depicted Pub/Sub values before each draw cycle.

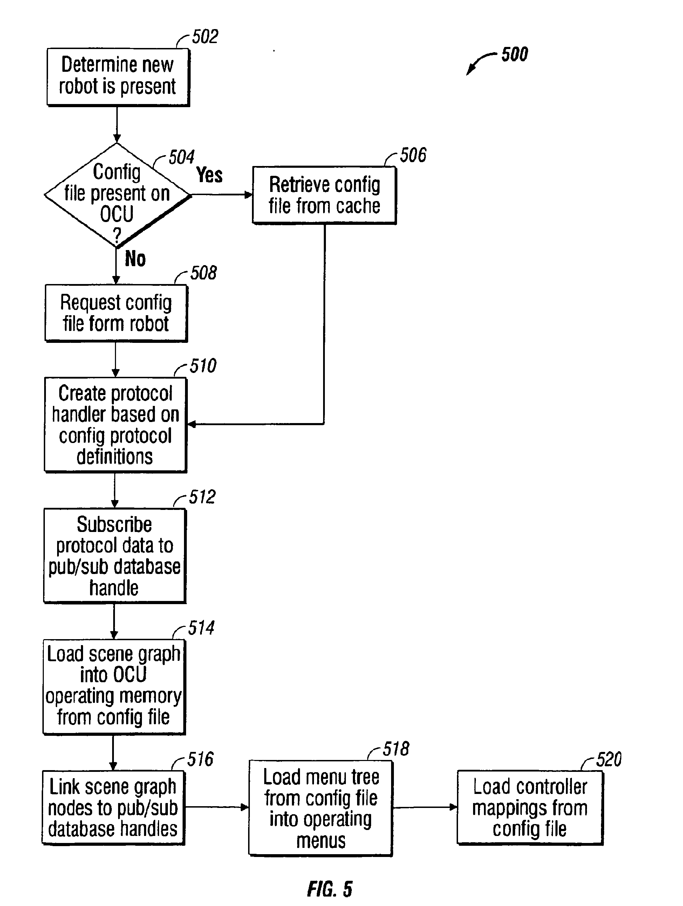

Fig. 5 shows a flow chart 500 of a new robot activation or configuration sequence. If the connection marshaller determines a new robot is present in step 502, it then obtains identifying information from robot and checks to see if a configuration file for the robot is stored in memory on the OCU. If the config file is present for the identified robot config file is retrieved from memory in step 506. If no configuration file is stored on the OCU for the identified robot (step 504), the connection marshaller requests a configuration file from the robot in step 508. Upon receiving the config file, marshaller creates a protocol handler based on the config file's protocol definitions in step 510. The marshaller then subscribes the data fields in the protocol data to be Pub/Sub database and pulling their names or handles as designated by the robot config file in step 512. Next the robot loads the scene graph provided in the robot config file into OCU operating memory in step 514. The marshaller links or subscribes the appropriate scene graph nodes to their respective Pub/Sub database handles in step 516. The marshaller loads the menu tree information provided in the robot config file into the OCU operating menus in step 518. Finally, the OCU loads controller mappings from the robot config file in step 520.

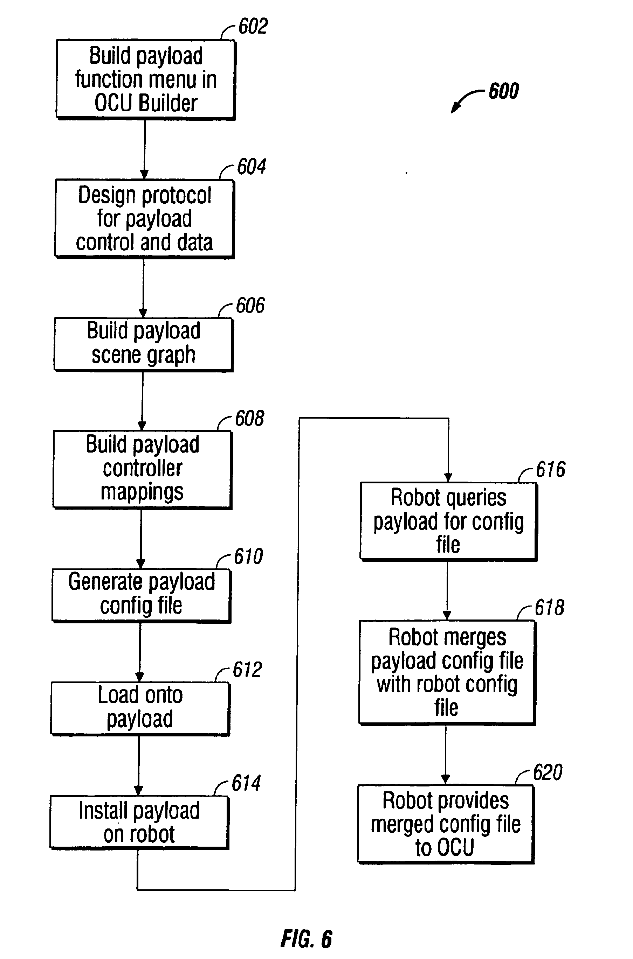

Fig. 6 shows a flow chart of a robot payload configuration sequence. In this scenario, a robot is to be fitted with a special-purpose payload, such as, for example, and IR camera payload, or a radiation or nerve gas detector. In such a case, the robot's operator control unit (OCU) should be able to control the payload and received telemetry data or video from the payload. In this implementation, the OCU is configured to control the payload by a combined configuration file provided by the robot. In the depicted step 602, the system designer builds a payload function menu of command for the OCU user to activate features on the payload. In step 604, the designer builds a protocol to exchange payload control commands and data with the OCU. In step 606, the designer builds a payload scene graph containing one or more panels having graphics with readouts, dials, soft buttons, or video views, for example. This scene graph is preferably an OSG scene graph. Next in step 608, the designer builds the payload controller mappings to match the OCU controller inputs with payload functions, For example, controller mappings may map joystick movements to control a manipulator arm payload. These for design products are combined into one configuration file in step 610. While particular order is shown for generating the design products, this is not limiting and design products may be made by different designers in different orders.

After a payload config file is generated in step 610, the config file is loaded onto the payload and step 612. The payload may then be installed on the robot in step 614. In this implementation, the robot next queries the payload to request the payload's config file in step 616. In step 618, the robot examines the payload config file to determine the appropriate manner to merge payload config file With the robot's own config file. This may be done, for but a set of rules that determine where, in the robots scene graph, a payload control interface with a certain functionality will be presented. For example, a manipulator arm may require a video view and joystick and button control configuration to be accessible on the OCU screen at or near the top level of the robot scene graph. Such a scenario provides the operator quick access to the functionality of the manipulator arm payload. As another example, a radiation detector payload may present in the robots scene graph in the top level instrument panel, a readily visible readout to indicate dangerous radiation levels. The config file merging functionality described in step 618 is preferably accomplished by the robots controller or computer. Next in step 620, robot provides emerged configuration file to the OCU upon request. The OCU been configured to itself as described herein to provide a control interface to both the robot and the payload according to the format of instructions contained in emerged configuration. More than one payload may be so configured on a single robot. The merging functionality performed by the robots controller in the program, for example, to give priority and position in the robot's scene graph and menu tree to a certain type of payload designated as a higher priority payload, over another type of payload designated as a lower priority payload.

While this payload configuration scheme is shown for this implementation, of course other schemes may be employed to configure payloads in the context of the OCU configuration systems described herein. For example, robots that are not provided the software to merge payload configuration files with their own robot configuration file may be provided with a combined configuration file (robot + payload) authored using the OCU builder. In another example scheme, payload config file may be sent separately to the OCU and associated with their host robot, and the operator may choose where to display the payload control panel.

## Claims

1. A method of configuring a robot operator control unit (104) for use with a robot comprising:
requesting, by the operator control unit, a configuration file from the robot (106), the file comprising:
a scene graph (114A, 416) displayed by a scene graph module (206) to communicate telemetry data received from the robot and/or a robot payload;
a protocol definition (114B) including a network communication protocol of the robot; and
a controller input mapping (114C) used by a controller module (212) for associating manual control elements of the control unit to commands interpretable by the robot;
receiving the configuration file at the operator control unit;
configuring a graphical user interface according to the scene graph (114A, 416) of the configuration file (114) for display on the operator control unit (104);
configuring a protocol handler (414) for the operator control unit to form communication packets according to the network communication protocol of the robot;
configuring the robot controller input mapping (114C) for the operator control unit to translate operator commands into robot commands;
providing robot telemetry data to the operator via the configured graphical user interface;
translating operator commands into robot commands via the controller input mapping (114C),
forming communication packets using the protocol handler (414) including the robot commands according to the network communication protocol of the robot; and
sending the communication packets including the robot commands to the robot.

2. The method of claim 1 further comprising adjusting control configurations and display topology on the operator control unit (104) based on the configuration file (114).

3. The method of claims 1 or 2 in which the configuration file (114) includes an indicator of one or more instrument scene graphics (120).

4. The method of any of claims 1-3 in which the configuration file (114) includes controller mapping indicators (114C) pointing to manual controls on the control unit.

5. The method of any of claims 1-4 in which the configuration file (114) includes one or more scene graph descriptors (114A) including a tree structure defining graphical panels of a robot graphical user interface.

6. The method of claim 5 in which at least one of the one or more scene graph descriptors (114A) is an OSG scene graph.

7. The method any of claims 1-6 further comprising:
storing, on the robot (106), a definition of a robot data communications protocol as part of the configuration file (114);
wherein requesting the configuration file includes communicating a request from a robot operator control unit (104) to the robot (106) for the definition of the robot data communications protocol; and
configuring the robot operator control unit (104) to receive telemetry data from the robot (106) formatted according to the definition of the robot data communications protocol.

8. The method of any of claims 1-7 further comprising:
storing, on the robot, a definition of a robot control protocol as part of the configuration file (114);
wherein requesting the configuration file includes communicating a request from the robot operator control unit (104) to the robot (106) for the definition of the robot control protocol; and
configuring the robot operator control unit (104) to send robot command and control data to the robot (106) formatted according to the definition of the robot control protocol.

9. The method of any of claims 1-8 wherein communication of any protocol definitions from the robot (106) to the operator control unit (104) is accomplished by transmitting one or more configuration files (114) from the robot (106) to the operator control unit (104).

10. The method of any of claims 1-9 further comprising:
storing, on the robot, a definition of a robot function menu structure as part of the configuration file (114);
wherein requesting the configuration file includes communicating a request from the robot operator control unit (104) to the robot (106) for the definition of the robot function menu structure; and
configuring the robot operator control unit (104) to present a robot operating menu to a user formatted according to the definition of the robot function menu structure.

11. The method of claim 10 wherein the communication of the robot function menu structure from the robot to the operator control unit (104) is accomplished by transmitting one or more configuration files from the robot (106) to the operator control unit (104).

12. The method of any of claims 1-11 further comprising:
storing, on the robot (106), a definition of a robot controller input mapping;
wherein requesting the configuration file includes communicating a request from the robot operator control unit (104) to the robot (106) for the definition of the robot controller input mapping; and
configuring the robot operator control unit (104) to map input signals from at least one user input device, associated with the robot operator control unit (104), according to the definition of the robot controller input mappings.

13. The method of any of claims 1-12 further comprising:
storing, on the robot (106), a definition of a robot instrument scene graphic;
wherein requesting the configuration file includes communicating a request from the robot operator control unit (104) to the robot (106) for the definition of the robot instrument scene graphic; and
configuring the robot operator control unit (104) to display at least one robot control panel according to the definition of the robot instrument scene graphic.

14. A robot operator control unit (104) comprising:
a scene graph display module (206) for rendering a graphical display for a user interface and for rendering robot telemetry data configured to build a graphical user interface according to the scene graph (114A, 416) of the configuration file (114) for display on the operator control unit (104);
a protocol adapter module (218);
a controller I/O module (212);
a protocol handler (414) configured to form communication packets according to the network communication protocol of the robot; and
a connection marshaller module (404) operative to request configuration data from a robot (106) and configure the scene graph display module (206), the protocol adapter module, and the controller I/O module (212) according to a configuration file (114) comprising:
a scene graph (114A, 416);
a protocol definition (114B) including a network communication protocol of the robot; and
a controller input mapping (114C) used by a controller module (212) for associating manual control elements of the control unit to commands interpretable by the robot,
wherein the operator control unit (104) is adapted to:
configure the robot controller input mapping (114C) for the operator control unit to translate operator commands into robot commands;
provide robot telemetry data to the operator via the configured graphical user interface;
translate operator commands into robot commands via the controller input I mapping (114C);
form communication packets using the protocol handler (414) including the robot commands according to the network communication protocol of the robot; and
send the communication packets including the robot commands to the robot.

15. The robot operator control unit (104) of claim 14 further comprising a publication/subscription database in which robot telemetry data is associated with nodes in a scene graph displayed by the scene graph display module (206).

16. The robot operator control unit (104) of claim 14, further comprising an operator control unit publication/subscription database and wherein the protocol adapter module (218) includes a packet dictionary and configured to look up a structure of a received packet in the protocol packet dictionary and to disassemble the packet into a robot publication/subscription database by publishing telemetry data received from the robot to appropriate publication/subscription notices in the operator control unit publication/subscription database.

## Patentansprüche

1. Ein Verfahren zur Konfiguration einer Roboter-Bediener-Steuereinheit (104) für den Gebrauch mit einem Roboter umfassend:
Anfragen einer Konfigurationsdatei von dem Roboter (106) durch die Bediener-Steuereinheit, die Datei umfassend:
einen Szenengraphen (114A, 416), der von einer Szenengraphen-Baugruppe (206) dargestellt wird, um Telemetriedaten zu übermitteln, empfangen von dem Roboter und/oder einer Roboternutzlast;
eine Protokolldefinition (114B), die ein NetzwerkKommunikationsprotokoll des Roboters beinhaltet; und
eine Eingangszuordnung der Steuerung (114C), die von einer Steuerungsbaugruppe (212) verwendet wird, um manuelle Steuerkomponenten der Steuereinheit mit Befehlen zu verbinden, die von dem Roboter interpretierbar sind;
Empfangen der Konfigurationsdatei an der Bediener-Steuereinheit;
Konfigurieren einer graphischen Benutzeroberfläche gemäß des Szenengraphen (114A, 416) der Konfigurationsdatei (114) zur Darstellung auf der Bediener-Steuereinheit (104);
Konfiguration eines Protokoll-Steuerungsprogramms (414) für die Bediener-Steuereinheit, um Kommunikationspakete gemäß des Kommunikationsprotokolls des Roboters zu bilden;
Konfigurieren der Eingangszuordnung der Robotersteuerung (114C) für die Bediener-Steuereinheit um die Bedienerbefehle in Roboterbefehle zu übersetzen;
Bereitstellen von Roboter-Telemetriedaten für den Bediener über die konfigurierte, graphische Benutzeroberfläche;
Übersetzen der Bedienerbefehle in Roboterbefehle über die Eingangszuordnung der Steuerung (114C),
Bilden von Kommunikationspaketen unter Verwendung des Protokoll-Steuerungsprogramms (414), die die Roboterbefehle gemäß des NetzwerkKommunikationsprotokolls des Roboters beinhaltet; und
Schicken der Kommunikationspakete, die die Roboterbefehle beinhalten, an den Roboter.

2. Das Verfahren nach Anspruch 1, weiter umfassend Anpassen von Steuer-Konfigurationen und Darstellungstopologie auf der Bediener-Steuereinheit (104), basierend auf der Konfigurationsdatei (114).

3. Das Verfahren nach Ansprüchen 1 oder 2, bei dem die Konfigurationsdatei (114) eine Anzeige für eine oder mehrere Instrument-Szenengraphiken (120) beinhaltet.

4. Das Verfahren nach irgendeinem der Ansprüche 1-3, bei dem die Konfigurationsdatei (114) Steuerungszuordnungs-Anzeigen (114C) beinhaltet, die auf manuelle Steuerelemente auf der Steuereinheit zeigen.

5. Das Verfahren nach irgendeinem der Ansprüche 1-4, bei dem die Konfigurationsdatei (114) einen oder mehrere Szenengraphen-Deskriptoren (114A) beinhaltet, die eine Baumstruktur beinhalten, die graphische Panels einer graphischen Roboter-Benutzeroberfläche definiert.

6. Das Verfahren nach Anspruch 5, in dem mindestens einer des einen oder der mehreren Szenengraphen-Deskriptoren (114A) ein OSG Szenengraph ist.

7. Das Verfahren nach irgendeinem der Ansprüche 1-6, weiter umfassend:
Speichern einer Definition eines Roboterdatenkommunikationsprotokolls auf dem Roboter (106) als Teil der Konfigurationsdatei (114);
wobei das Anfragen der Konfigurationsdatei die Übermittlung einer Anfrage von einer Roboter-Bediener-Steuereinheit (104) an den Roboter (106) beinhaltet, für das Definieren des Roboterdatenkommunikationsprotokolls; und
Konfigurieren der Roboter-Bediener-Steuereinheit (104), um Telemetriedaten von dem Roboter (106) zu empfangen, die gemäß der Definition des Roboterdatenkommunikationsprotokolls formatiert sind.

8. Das Verfahren nach irgendeinem der Ansprüche 1-7, weiter umfassend:
Speichern einer Definition eines Robotersteuerprotokolls auf dem Roboter als Teil der Konfigurationsdatei (114);
wobei Anfragen der Konfigurationsdatei die Übermittlung einer Anfrage von der Roboter-Bediener-Steuereinheit (104) an den Roboter (106) beinhaltet, für das Definieren des Robotersteuerprotokolls; und
Konfigurieren der Roboter-Bediener-Steuereinheit (104), um Roboterbefehle und -steuerdaten an den Roboter (106) zu schicken, die gemäß der Definition des Robotersteuerprotokolls formatiert sind.

9. Das Verfahren nach irgendeinem der Ansprüche 1-8, wobei die Übertragung von irgendwelchen Protokolldefinitionen von dem Roboter (106) zu der Bediener-Steuereinheit (104) erreicht wird durch das Übermitteln einer oder mehrerer Konfigurationsdateien (114) von dem Roboter (106) an die Bediener-Steuereinheit (104).

10. Das Verfahren nach irgendeinem der Ansprüche 1-9, weiter umfassend:
Speichern einer Definition einer Roboter-Funktionsmenü-Struktur auf dem Roboter als Teil der Konfigurationsdatei (114);
wobei Anfragen der Konfigurationsdatei die Übermittlung einer Anfrage von der Roboter-Bediener-Steuereinheit (104) an den Roboter (106) beinhaltet, für das Definieren der Roboter-Funktionsmenü-Struktur; und
Konfigurieren der Roboter-Bediener-Steuereinheit (104), um ein Roboter-Bedienermenü für einen Benutzer darzustellen, das gemäß der Definition der Roboter-Funktionsmenü-Struktur formatiert ist.

11. Das Verfahren nach Anspruch 10, wobei die Übertragung der Roboter-Funktionsmenü-Struktur von dem Roboter an die Bediener-Steuereinheit (104) erreicht wird durch das Übermitteln einer oder mehrere Konfigurationsdateien von dem Roboter (106) an die Bediener-Steuereinheit (104).

12. Das Verfahren nach irgendeinem der Ansprüche 1-11, weiter umfassend:
Speichern einer Definition einer Eingangszuordnung der Robotersteuerung auf dem Roboter;
wobei Anfragen der Konfigurationsdatei die Übermittlung einer Anfrage von der Roboter-Bediener-Steuereinheit (104) an den Roboter (106) beinhaltet, für das Definieren der Eingangszuordnung der Robotersteuerung; und
Konfigurieren der Roboter-Bediener-Steuereinheit (104), um Eingangssignale von mindestens einem Benutzereingabegerät zuzuordnen,
die mit der Roboter-Bediener-Steuereinheit (104) verbunden sind, gemäß der Definition der Eingangszuordnung der Robotersteuerungen.

13. Das Verfahren nach irgendeinem der Ansprüche 1-12, weiter umfassend:
Speichern einer Definition einer Roboter-Instrument-Szenengraphik auf dem Roboter (106);
wobei Anfragen der Konfigurationsdatei die Übermittlung einer Anfrage von der Roboter-Bediener-Steuereinheit (104) an den Roboter (106) beinhaltet, für das Definieren der Roboter-Instrument-Szenengraphik; und
Konfigurieren der Roboter-Bediener-Steuereinheit (104), um mindestens ein Roboter-Steuerpanel darzustellen, gemäß der Definition der Roboter-Instrument-Szenengraphik.

14. Eine Roboter-Bediener-Steuereinheit (104) umfassend:
eine Szenegraphen-Darstellungsbaugruppe (206), um eine graphische Darstellung wiederzugeben für eine Benutzeroberfläche und zur Wiedergabe von Roboter-Telemetriedaten, die gestaltet sind, um eine graphische Benutzeroberfläche gemäß des Szenegraphen (114A, 416) der Konfigurationsdatei (114), für die Darstellung auf der Bediener-Steuereinheit (104), zu erstellen;
eine Protokoll-Adapter-Baugruppe (218);
eine Steuerungs-E/A-Baugruppe (212);
ein Protokoll-Steuerungsprogramm (414), das gestaltet ist, um Kommunikationspakete gemäß des Netzwerkkommunikationsprotokolls des Roboters zu bilden; und
eine Verbindungs-Einweiser-Baugruppe (404), tätig, um Konfigurationsdaten von einem Roboter (106) anzufragen und die Szenengraphen-Darstellungsbaugruppe (206), die Protokoll-Adapter-Baugruppe und die Steuerungs-E/A-Baugruppe gemäß einer Konfigurationsdatei (114) zu konfigurieren, die umfasst:
einen Szenegraphen (114A, 416);
eine Protokolldefinition (114B), die ein Netzwerkkommunikationsprotokoll des Roboters beinhaltet; und
eine Eingangszuordnung der Steuerung (114C), die von einer Steuerungsbaugruppe (212) verwendet wird, um manuelle Steuerkomponenten der Steuereinheit mit Befehlen zu verbinden, die von dem Roboter interpretierbar sind,
wobei die Bediener-Steuereinheit (104) gestaltet ist, um:
die Eingangszuordnung der Robotersteuerung (114C) für die Bediener-Steuereinheit zu konfigurieren, um Bedienerbefehle in Roboterbefehle zu übersetzen;
Robotertelemetriedaten für den Bediener bereitzustellen über die konfigurierte, graphische Benutzeroberfläche;
Bedienerbefehle in Roboterbefehle zu übersetzen über die Eingangszuordnung der Steuerung (114C);
Kommunikationspakete zu erstellen unter Verwendung des Protokoll-Steuerungsprogramms (414), die die Roboterbefehle gemäß des Netzwerkkommunikationsprotokolls des Roboters enthalten; und
Kommunikationspakete an den Roboter zu schicken, die die Roboterbefehle beinhalten.

15. Die Roboter-Bediener-Steuereinheit (104) gemäß Anspruch 14, weiter umfassend eine Publizierungs-/Subskriptionsdatenbank in der die Robotertelemetriedaten mit Knoten in einem Szenegraphen verbunden sind, die von der Szenegraphen-Darstellungsbaugruppe (206) dargestellt werden.

16. Die Roboter-Bediener-Steuerungseinheit (104) nach Anspruch 14, weiter umfassend eine Bediener-Steuerungseinheit-Publizierungs-/Subskriptionsdatenbank und wobei die Protokoll-Adapter-Baugruppe (218) ein Paketwörterbuch beinhaltet und gestaltet ist, um eine Struktur eines empfangenen Paktes im Protokollpaket-Wörterbuch nachzuschlagen und, um das Paket zu zerlegen in eine Roboter Publizierungs-/Subskriptionsdatenbank durch das Publizieren von Telemetriedaten, die vom Roboter empfangen wurden zu entsprechenden Publizierungs-/Subskriptions-Einträgen in der Bediener-Steuerungseinheit-Publizierungs-/Subskriptionsdatenbank.

## Revendications

1. Procédé de configuration d'une unité de commande d'opérateur (104) de robot destinée à être utilisée avec un robot, comprenant les étapes consistant à :
faire la demande, au moyen de l'unité de commande d'opérateur, d'un fichier de configuration auprès du robot (106), le fichier comprenant :
une représentation graphique de scène (114A, 416) affichée par un module d'affichage (206) de représentation graphique de scène pour communiquer des données de télémesure reçues du robot et/ou une charge utile de robot ;
une définition de protocole (114B) comprenant un protocole de communication par réseau du robot ; et
un mappage d'entrée (114C) de contrôleur utilisé par un module contrôleur (212) pour associer des éléments de commandes manuelles de l'unité de commande à des ordres interprétables par le robot ;
recevoir le fichier de configuration au niveau de l'unité de commande d'opérateur ;
configurer une interface utilisateur graphique conformément à la représentation graphique de scène (114A, 416) du fichier de configuration (114) en vue de son affichage sur l'unité de commande d'opérateur (104) ;
configurer un gestionnaire de protocole (414) pour l'unité de commande d'opérateur afin de former des paquets de communication conformément au protocole de communication par réseau du robot ;
configurer le mappage d'entrée (114C) de contrôleur de robot pour l'unité de commande d'opérateur afin de traduire des ordres d'opérateur en ordres de robot ;
fournir des données de télémesure de robot à l'opérateur par l'intermédiaire de l'interface utilisateur graphique configurée ;
traduire des ordres d'opérateur en ordres de robot par l'intermédiaire du mappage d'entrée (114C) de contrôleur ;
former au moyen du gestionnaire de protocole (414) des paquets de communication comprenant les ordres de robot conformément au protocole de communication par réseau du robot ; et
transmettre au robot les paquets de communication comprenant les ordres de robot.

2. Procédé selon la revendication 1, comprenant en outre l'étape consistant à régler des configurations de commande et une topologie d'affichage sur l'unité de commande d'opérateur (104) compte tenu du fichier de configuration (114).

3. Procédé selon la revendication 1 ou 2, le fichier de configuration (114) comprenant un indicateur d'une ou de plusieurs représentations graphiques de scène d'instrument (120).

4. Procédé selon l'une quelconque des revendications 1 à 3, le fichier de configuration (114) comprenant des indicateurs (114C) de mappage de contrôleur pointant sur des commandes manuelles sur l'unité de commande.

5. Procédé selon l'une quelconque des revendications 1 à 4, le fichier de configuration (114) comprenant un ou plusieurs descripteurs (114A) de représentation graphique de scène comprenant une structure arborescente définissant des panneaux graphiques d'une interface utilisateur graphique de robot.

6. Procédé selon la revendication 5, le ou au moins un des descripteurs (114A) de représentation graphique de scène étant une représentation graphique de scène de type OSG.

7. Procédé selon l'une quelconque des revendications 1 à 6, comprenant en outre les étapes consistant à :
mémoriser, sur le robot (106), une définition d'un protocole de communication de données de robot faisant partie du fichier de configuration (114) ;
l'étape consistant à faire la demande du fichier de configuration comprenant l'étape consistant à communiquer, de l'unité de commande d'opérateur (104) de robot au robot (106), une demande de définition du protocole de communications de données de robot ; et
configurer l'unité de commande d'opérateur (104) de robot pour lui faire recevoir des données de télémesure du robot (106) formatées conformément à la définition du protocole de communication de données de robot.

8. Procédé selon l'une quelconque des revendications 1 à 7, comprenant en outre les étapes consistant à :
mémoriser, sur le robot, une définition d'un protocole de commande de robot faisant partie du fichier de configuration (114) ;
l'étape consistant à faire la demande du fichier de configuration comprenant l'étape consistant à communiquer, de l'unité de commande d'opérateur (104) de robot au robot (106), une demande de définition du protocole de commande de robot ; et
configurer l'unité de commande d'opérateur (104) de robot pour lui faire transmettre des ordres et des données de commande de robot (106) formatés conformément à la définition du protocole de commande de robot.

9. Procédé selon l'une quelconque des revendications 1 à 8, la communication de toute définition de protocole du robot (106) à l'unité de commande d'opérateur (104) s'effectuant par transmission d'un ou de plusieurs fichiers de configuration (114) du robot (106) à l'unité de commande d'opérateur (104).

10. Procédé selon l'une quelconque des revendications 1 à 9, comprenant en outre les étapes consistant à :
mémoriser, sur le robot, une définition d'une structure de menu de fonctions de robot faisant partie du fichier de configuration (114) ;
l'étape consistant à faire la demande du fichier de configuration comprenant l'étape consistant à communiquer, de l'unité de commande d'opérateur (104) de robot au robot (106), une demande de définition de la structure de menu de fonctions de robot ; et
configurer l'unité de commande d'opérateur (104) de robot pour lui faire présenter à un utilisateur un menu d'exploitation de robot formaté conformément à la définition de la structure de menu de fonctions de robot.

11. Procédé selon la revendication 10, la communication de la structure de menu de fonctions de robot, du robot à l'unité de commande d'opérateur (104), s'effectuant par transmission d'un ou de plusieurs fichiers de configuration du robot (106) à l'unité de commande d'opérateur (104).

12. Procédé selon l'une quelconque des revendications 1 à 11, comprenant en outre les étapes consistant à :
mémoriser, sur le robot (106), une définition d'un mappage d'entrée de contrôleur de robot ;
l'étape consistant à faire la demande du fichier de configuration comprenant l'étape consistant à communiquer, de l'unité de commande d'opérateur (104) de robot au robot (106), une demande de définition de mappage d'entrée de contrôleur de robot ; et
configurer l'unité de commande d'opérateur (104) de robot pour lui faire mapper des signaux d'entrée provenant d'au moins un dispositif d'entrée utilisateur, associé à l'unité de commande d'opérateur (104) de robot, conformément à la définition du mappage d'entrée de contrôleur de robot.

13. Procédé selon l'une quelconque des revendications 1 à 12, comprenant en outre les étapes consistant à :
mémoriser, sur le robot (106), une définition d'une représentation graphique de scène d'instrument de robot ;
l'étape consistant à faire la demande du fichier de configuration comprenant l'étape consistant à communiquer, de l'unité de commande d'opérateur (104) de robot au robot (106), une demande de définition de la représentation graphique de scène d'instrument de robot ; et
configurer l'unité de commande d'opérateur (104) de robot pour lui faire afficher au moins un panneau de commande de robot conformément à la définition de la représentation graphique de scène d'instrument de robot.

14. Unité de commande d'opérateur (104) de robot, comprenant :
un module d'affichage (206) de représentation graphique de scène destiné à rendre un affichage graphique d'une interface utilisateur et à rendre des données de télémesure de robot configurées pour construire une interface utilisateur graphique conformément à une représentation graphique de scène (114A, 416) d'un fichier de configuration (114) en vue de son affichage sur l'unité de commande d'opérateur (104) ;
un module adaptateur de protocole (218) ;
un module contrôleur E/S (212) ;
un gestionnaire de protocole (414) configuré pour former des paquets de communication conformément à un protocole de communication par réseau du robot ; et
un module d'ordonnancement de connexion (404) apte à faire une demande de données de configuration auprès d'un robot (106) et à configurer le module d'affichage (206) de représentation graphique de scène, le module adaptateur de protocole et le module contrôleur E/S (212) conformément au fichier de configuration (114), lequel comprend :
une représentation graphique de scène (114A, 416) ;
une définition de protocole (114B) comprenant un protocole de communication par réseau du robot ; et
un mappage d'entrée (114C) de contrôleur utilisé par le module contrôleur (212) pour associer des éléments de commandes manuelles de l'unité de commande à des ordres interprétables par le robot ;
l'unité de commande d'opérateur (104) étant conçue pour :
configurer le mappage d'entrée (114C) de contrôleur de robot pour l'unité de commande d'opérateur afin de traduire des ordres d'opérateur en ordres de robot ;
fournir des données de télémesure de robot à l'opérateur par l'intermédiaire de l'interface utilisateur graphique configurée ;
traduire des ordres d'opérateur en ordres de robot par l'intermédiaire du mappage d'entrée (114C) de contrôleur ;
former au moyen du gestionnaire de protocole (414) des paquets de communication comprenant les ordres de robot conformément au protocole de communication par réseau du robot ; et
transmettre au robot les paquets de communication comprenant les ordres de robot.

15. Unité de commande d'opérateur (104) de robot selon la revendication 14, comprenant en outre une base de données de publication/inscription dans laquelle des données de télémesure de robot sont associées à des noeuds dans la représentation graphique de scène affichée par le module d'affichage (206) de représentation graphique de scène.

16. Unité de commande d'opérateur (104) de robot selon la revendication 14, comprenant en outre une base de données de publication/inscription d'unité de commande d'opérateur, et le module adaptateur de protocole (218) comprenant un dictionnaire de paquets de protocole et étant configuré pour rechercher une structure d'un paquet reçu dans le dictionnaire de paquets de protocole et pour désassembler le paquet dans une base de données de publication/inscription de robot en publiant des données de télémesure reçues du robot dans des notifications de publication/inscription appropriées dans la base de données de publication/inscription d'unité de commande d'opérateur.
